# EUROPÄISCHE PATENTSCHRIFT

(11) **EP 2 108 589 B1**
(45) Veröffentlichungstag und Bekanntmachung des Hinweises auf die Patenterteilung: **16.05.2012**
(21) Anmeldenummer: 09005014.7
(22) Anmeldetag: 03.04.2009
(51) Int. Cl.: B65B 25/00, B65B 35/56, B65G 17/32, B65G 29/02, B65G 47/84

(54) **Verfahren und Vorrichtung zur Übergabe von kleinstückigen insbesondere mit einem Stiel versehenen Produkten an eine Längsfördereinrichtung**
Method and device for transferring small products on a longitudinal transport device, especially those with a handle
Procédé et dispositif de transfert de produits en petites pièces, notamment dotés d'un manche, sur un dispositif de transport longitudinal

(30) Priorität: 10.04.2008 DE 102008018224
(43) Veröffentlichungstag der Anmeldung: 14.10.2009
(73) Patentinhaber: THEEGARTEN-PACTEC GMBH & CO. KG, 01237 Dresden (DE)
(72) Erfinder: Steffen, John, 01217 Dresden (DE); Bodach, Siegmund, 01156 Dresden (DE); Seibt, Wilfried, 01189 Dresden (DE); Wehner, Gert, 01328 Dresden (DE)
(74) Vertreter: Grünecker, Kinkeldey, Stockmair & Schwanhäusser

(56) Entgegenhaltungen:
- EP-A- 1 283 183
- EP-A- 1 357 063
- WO-A-03/043436
- WO-A-2007/121930

## Beschreibung

Die Erfindung betrifft ein Verfahren und eine Vorrichtung zur Zuführung von kleinstückigen, insbesondere mit einem Stiel versehenen Produkten an eine Längsfördereinrichtung nach den Oberbegriffen der Ansprüche 1 und 8.

Die Zuführung kleinstückiger Produkte, wie z.B. von Hart- oder Weichkaramellen, Pralinen oder anderen kleinstückigen Süßwaren, bildet vielfach eine Leistungsbegrenzung für den nachgeschalteten Verpackungsvorgang, insbesondere, wenn es sich um verhältnismäßig komplizierte Produkte handelt, wie dies z.B. Produkte mit einem Stiel (Lollipops) darstellen, und die sowohl mittels intermittierend arbeitender Verpackungsmaschinen als auch Hochleistungs-Verpackungsmaschinen verpackt werden, die nach dem kontinuierlichen Arbeitsprinzip arbeiten. Häufig treten in den Zuführungssystemen dabei verhältnismäßig produktbeanspruchende Zuführungsabschnitte auf, bei denen die Produkte zwischen verschiedenen Transporteinrichtungen erheblichen Beschleunigungen ausgesetzt sind, insbesondere in Verbindung mit dem Problem, die Produkte einzeln und in vorbestimmter Orientierung für den eigentlichen Verpackungsprozeß zur Verfügung zu stellen.

So sind z.B. aus der EP 1 283 183 A1 bzw. der EP 1 310 430 A1 Zuführungssysteme für die vereinzelte Zuführung von Produkten mit Stiel (Lollipos) bekannt, bei denen die zunächst aus einem Produktvorrat mittels eines Vereinzelungstellers umfangsseitig vereinzelten Produkte direkt für eine zugeordnete Längsführung in Richtung der Verpackungs-maschine, z.B. einer Flowpackmaschine, dem Vereinzelungsteller radial (EP1283183A1 oder tangential (EP1310430A1) entnommen werden, wobei die Lollipops, mit ihrem Ball vorauslaufend, d.h. mit nach rückwärts gerichtetem Stiel oder auch mit nach vorn weisendem Stiel in Transportrichtung liegend der Verpackungsmaschine zugeführt werden können.

Die Verkettung des Vereinzelungstellers direkt mit einer Längsfördereinrichtung, in der die Produkte (insbesondere Lollipops) mit ihrem Stiel ausgerichtet in Transportrichtung gefördert werden, bereitet jedoch aufgrund der unterschiedlichen Arbeitsgeschwindigkeiten, die mit einem Vereinzelungsteller einerseits sowie mit einer direkt diesem zugeordneten Längsfördereinrichtung andererseits erreichbar sind, Schwierigkeiten. Hinzu kommt das Problem der veränderten Lageorientierung der Lollipops zwischen Vereinzelungsteller und Längsförderer.

Dies führt nicht nur zu einer Leistungsbeschränkung auf ca. 350 bis 400 Arbeitstakte pro Minute, sondern auch zu einer wenig schonenden Produktbehandlung, da die Lollipops einen Ebenenwechsel zwischen einer Ebene des Vereinzelungstellers zu einer Ebene einer Längsfördereinrichtung, wie z.B. einer Transportkette oder eines Transportbandes, durchlaufen, woraus eine Verzögerung und damit Leistungseinschränkung für die nachgeordnete Verpackungsmaschine resultiert. Zudem tritt eine hohe Produktbelastung dadurch auf, dass der Längsförderer, wie z.B. eine Mitnehmerkette, die Produkte beschleunigt, so dass entsprechende Mitnehmer mit einer erhöhten Geschwindigkeit auf die aufgenommenen Produkte treffen, wobei dieses Problem ggf. auch noch mit einem Richtungswechsel in der Förderrichtung der Produkte einhergehen kann, so dass eine Beschleunigung der Produkte praktisch von Null auf die Transportgeschwindigkeit des Längsförderers (Kettengeschwindigkeit) erfolgt.

Aus der WO 2007/121930 A1 ist eine Vereinzelungsvorrichtung für Lollipops bekannt, bei der diese in einer horizontalen Bereitstellungsebene rotatorisch zugeführt und von einem Entnahmerad am Stiel ergriffen und zu einer Verpackungsvorrichtung weitergegeben werden. Hierbei werden allerdings zwei rotatorische Zuführungs- bzw. Artikelbewegungen miteinander verknüpft.

Der Erfindung liegt die Aufgabe zugrunde, ein Verfahren und eine Vorrichtung der eingangs genannten Art derart zu verbessern, dass auch bei kleinstückigen Produkten mit komplizierter Konfiguration, wie z.B. Lollipops, eine deutliche Steigerung der Verpackungsleistung auch für Verpackungen erreichbar ist, die z.B. als Einzel- oder Sammelverpackungen die Produkte ganzheitlich umhüllen, wie das z.B. bei Schlauchbeutelverpackungen (Flowpacks) der Fall ist. Zugleich soll eine schonendere Produktbehandlung trotz deutlich erhöhter Arbeitsgeschwindigkeiten und Verpackungsleistungen erreicht werden.

Diese Aufgabe wird hinsichtlich eines Verfahrens der eingangs genannten Art erfindungsgemäß durch die Merkmale des Anspruches 1 sowie hinsichtlich einer Vorrichtung der eingangs genannten Art erfindungsgemäß durch die Merkmale des Anspruches 8 gelöst.

Ein erster wesentlicher Aspekt der Erfindung besteht darin, dass die Aufgabe (Übergabe) der Produkte an eine Längsfördereinrichtung, die als Zuführungsförderer für eine Verpackungsmaschine, wie z.B. eine Flowpack-Verpackungsmaschine bzw. Verpackungsmaschine mit einer Flowpack-Verpackungseinheit (Schlauchbeutelverpackungseinheit) dient und in der die Produkte, z.B. Lollipops, vereinzelt und "stromlinienförmig", d.h. mit einer vorbestimmten Produktausrichtung (Stiel in Zuförderrichtung orientiert stromauf oder stromab des Balles (Kopfes) des Lollipop), angeordnet sind, nicht unter direkter Verkettung der Längsfördereinrichtung mit einer, eine erste Produktvereinzelung bewirkenden Vereinzelungseinrichtung (wie z.B. einem Vereinzelungsteller) erfolgt.

Vielmehr ist zwischen beiden Systemen eine sowohl zeitliche als auch örtliche Harmonisierung ("Vermittlung") möglicherweise unterschiedlichen Fördergeschwindigkeiten wie auch der unterschiedlichen Produktorientierungen im Bereich der Vereinzelung einerseits und im Bereich des Längsförderers andererseits durch eine der Längsfördereinrichtung vorgeschaltete, kontinuierlich arbeitende erste Fördereinrichtung vorgesehen. Diese dient einerseits der Entnahme der in der stromaufseitigen Vereinzelungseinrichtung vereinzelten Produkte und andererseits deren Übergabe an die Längsfördereinrichtung, z.B. eine umlaufende Mitnehmerkette oder ein Transportband. Auf diese Weise kann nicht nur eine Angleichung bzw. Ausnutzung der jeweils möglichen Fördergeschwindigkeiten von Vereinzelungseinrichtung (Vereinzelungsteller) einerseits und Längsfördereinrichtung (z.B. Mitnehmerkette) andererseits erreicht werden, sondern auch eine äußerst produktschonende Einförderung von z.B. mit einem Stiel versehenen Produkten (Lollipops) in die Längsfördereinrichtung, wie z.B. eine Transportkette, die Mitnehmer aufweist.

Bevorzugte Ausgestaltungen der Erfindung sind Gegenstand der Unteransprüche.

Nach einer bevorzugten Ausführungsform der Erfindung ist die erste Bewegungsbahn eine um zumindest eine Rotationsachse verlaufende Bewegungsbahn, wobei eine Übergabegeschwindigkeit, d. h. eine Bewegungsgeschwindigkeit der Produkte in einem Übergabebereich von der ersten auf die zweite Bewegungsbahn vorzugsweise zumindest im Wesentlichen harmonisiert ist und keine große Geschwindigkeitsdifferenz zwischen der Bewegungsgeschwindigkeit der Produkte entlang der ersten Bewegungsbahn und der Bewegungsgeschwindigkeit der Produkte entlang der zweiten Bewegungsbahn auftritt.

Nach einer bevorzugten Ausführungsform des erfindungsgemäßen Verfahrens werden die Produkte zur Vereinzelung im Wesentlichen horizontal geführt, werden auf der ersten Bewegungsbahn im Wesentlichen orthogonal zu der Vereinzelungsführung, d. h. der Führung während der Vereinzelung der Produkte geführt und werden entlang der zweiten Bewegungsbahn linear im Wesentlichen wiederum horizontal geführt.

Auf diese Weise wird in Verbindung mit der trotz Richtungsumkehr implementierten Vermeidung von wesentlichen Geschwindigkeitsdifferenzen zwischen den Produktgeschwindigkeiten auf den einzelnen Bewegungsbahnen, insbesondere der ersten Bewegungsbahn und der zweiten Bewegungsbahn, eine sehr schonende und von plötzlich auftretenden Beschleunigungen praktisch freie Handhabung der Produkte erreicht.

Vorzugsweise sind die kleinstückigen Produkte Produkte mit einem Stiel, der sich von einem Ball aus erstreckt, insbesondere Lollipops, wobei es bevorzugt wird, dass die Produkte zur Vereinzelung auf einer elliptischen oder kreisförmigen Bewegungsbahn im Wesentlichen um zumindest eine stationäre vertikale Achse zur Vereinzelung geführt werden und die Stiele der Produkte von dieser Bewegungsbahn radial nach außen bzw. radial auswärts weisen.

Vorzugsweise sind die Produkte auf der ersten Bewegungsbahn einer weiteren, von der bewegungsbahnbedingten Beschleunigung unabhängigen Beschleunigung unterworfen und es erfolgt bevorzugt nach einer Übergabe des Produktes von der ersten Bewegungsbahn, die eine rotatorische Bewebungsbahn ist, d. h. eine umlaufende Bewegungsbahn, auf die zweite, lineare Bewegungsbahn, eine Lage-Neuorientierung des Produktes. Auf diese Weise kann bevorzugt eine sich nicht leistungsbegrenzend auswirkende Produktorientierung in vorbereitender Übereinstimmung mit der späteren Gesamtverpackung bzw. der Verpackungsumhüllung eines Produktes oder Gruppen von Produkten erfolgen.

Beispielsweise können auf diese Weise die zunächst mit ihrem Stiel quer zur Transportrichtung auf die zweite lineare Bewegungsbahn aufgegebenen Produkte so umorientiert werden, dass z. B. ihre Stiele anschließend in Längsrichtung, d. h. in Richtung der zweiten, linearen Bewegungsbahn orientiert sind, so dass eine sich anschließende Verpackungseinheit die Produkte leicht für eine umhüllende Verpackung aufnehmen kann.

Vorzugsweise werden stromab einer Übergabeposition zwischen der ersten und zweiten Bewegungsbahn die Produkte beabstandet durch Mitnehmer der Längsfördereinrichtung geführt und/oder fortbewegt und/oder durch diese aufgenommen, z. B. abstützend getragen und/oder entlang einer Gleitfläche geschoben.

Vorzugsweise wird das Produkt mit dem Stiel in einer im Wesentlichen horizontalen Position auf der ersten Bewegungsbahn zwischen einer Aufnahmeposition A und einer Übergabeposition B an die Längsfördereinrichtung herangeführt, nach Übergabe an die Längsfördereinrichtung der Stiel aus einer im Wesentlichen horizontalen Position in eine aufgerichtete Zwischenposition bewegt und anschließend der Stiel in eine im Wesentlichen horizontale Position in Längsrichtung der Längsfördereinrichtung orientiert, so dass er sich im Wesentlichen parallel zu einer Bewegungsrichtung der Längsfördereinrichtung befindet und in Übereinstimmung mit der Richtung der zweiten Bewegungsbahn weiter gefördert wird.

Vorzugsweise ist die im Wesentlichen horizontale Position des Stieles des jeweiligen, in die Längsfördereinrichtung geförderten, Produktes im Wesentlichen in eine Position in einer horizontale Ebene gedreht, die um 90° gegenüber einer Position des Stieles in einer Übergabeposition zwischen der ersten und zweiten Bewegungsbahn in eine horizontale Ebene gedreht ist.

Für die spätere Verpackung, insbesondere Schlauchbeutelverpackung, die wahlweise das Produkt einzeln oder in einer Mehrzahl von Produkten (Produktgruppe) in einem einzigen Verpackungsschlauch aufnehmen kann, wird das Produkt vorzugsweise mit einem an dem Stiel befestigten Ball voraus, d. h. mit dem Ball einer Verpackungseinheit zugewandt, in der Längsfördereinrichtung aufgenommen, wobei vorzugsweise während des Einbringens der Produkte aus der Längsfördereinrichtung in die Verpackungseinheit, die Produkte im Wesentlichen beschleunigungsfrei in bzw. an die Verpackungseinheit übergeben werden.

Nach einem weiteren, bevorzugten Ausführungsbeispiel der erfindungsgemäßen Vorrichtung ist die erste Fördereinrichtung ein kontinuierlich, insbesondere um eine stationäre Achse, rotierendes Entnahmerad, das bevorzugt mit einer Mehrzahl von opponierend bewegbaren Greiferbackenpaaren versehen ist, wobei jedes Greiferbackenpaar an dem Entnahmerad schwenkbar um eine Rotationsachse gelagert ist, die zur Achse des Entnahmerades parallel ist und mit diesem umläuft.

Bevorzugt ist die Vereinzelungseinrichtung ein Vereinzelungsteller mit einem an einem Außenumfang desselben vorgesehenen Aufgabering, der Taschen zur Aufnahme der Produkte aufweist.

Nach noch einer weiteren, bevorzugten Ausführungsform der erfindungsgemäßen Zuführungsvorrichtung ist der Aufgabering gegensinnig zur Rotation einer einwärts, d. h. radial in Bezug auf den Aufgabering innen liegend, des Aufgabenringes angeordneten Verteilerscheibe drehbar, insbesondere wie die Verteilerscheibe um eine im Wesentlichen vertikal orientierte Achse drehbar.

Für die sichere Produktaufnahme von Produkten, die z. B. mit einem Stiel versehen sind oder in anderer Weise Elemente aufweisen, die sich nach außerhalb der Taschen des Aufgaberinges erstrecken, ist vorzugsweise vorgesehen, dass die Taschen am Außenumfang des Aufgaberinges in Aufnahmeschlitze münden, die vorzugsweise mit beiderseits derselben und insbesondere gleichmäßig geneigten und symmetrisch zu dem Aufnahmeschlitz ausgebildeten Einlaufschrägen versehen sind. Auf diese Weise wird zuverlässig eine Zwangsposition bzw. vorbestimmte Lage der in die Taschen vereinzelten Produkte gewährleistet.

Es wird ferner bevorzugt, dass die Längsfördereinrichtung stromab einer Übergabeposition, d.h. vorzugsweise an ihrem stromaufseitigen Ende der Längsfördereinrichtung eine Lagerorientierungseinrichtung für das Produkt aufweist. Diese wird insbesondere durch zusammenwirkende, vorzugsweise stationäre, Führungselemente gebildet, insbesondere zur Ausbildung einer Steuerungskurve für die Lageorientierung, d. h. für die Überführung des Produktes aus einer ersten Lage in eine zweite Lage, ausgebildet.

Nach noch einem weiteren, bevorzugten Ausführungsbeispiel der Erfindung ist im Bereich einer Übergabeposition (von einer ersten Bewegungsbahn auf eine zweite Bewegungsbahn) eine Geschwindigkeitsdifferenz zwischen der ersten Fördereinrichtung und einer Transportgeschwindigkeit der Längsfördereinrichtung minimiert, vorzugsweise im Wesentlichen 0 ist. Dabei umfasst die erste Fördereinrichtung insbesondere das Entnahmerad, wobei die Geschwindigkeitsdifferenz vorzugsweise durch eine Momentangeschwindigkeit der Greiferbacken desselben ausgebildet wird, diese Transportgeschwindigkeit der Produkte aber auch die Zuführgeschwindigkeit des Entnahmerades umfasst und dieses ebenfalls mit der Geschwindigkeit der Produkte auf der ersten Bewegungsbahn korrespondiert.

Eine Ausgestaltung der Lageorientierungseinrichtung kann insbesondere dadurch realisiert sein, dass die Längsfördereinrichtung oberhalb eines Transportmittels, das z. B. eine Transportkette oder ein Transportband ist, einen Führungsschlitz zur Ausbildung einer Steuerkurve durch opponierende Führungselemente im Anschluss an eine Übergabeposition von der ersten Fördereinrichtung auf die Längsfördereinrichtung aufweist. Diese Führungselemente dienen vorzugsweise zur lagerorientierenden Führung eines Stieles des Produktes sofern mit der Zuführungsvorrichtung Produkte mit einem Stiel und einem Ball, insbesondere Lollipops, verarbeitet werden.

Die Längsfördereinrichtung ist vorzugsweise mit beabstandeten Mitnehmern zum Eingriff mit dem Produkt, insbesondere einem Ball desselben und Transport zu einer Verpackungseinheit, die vorzugsweise eine Flowpack- d.h. Schlauchbeutelverpackungseinheit ist, versehen. Es ist vorteilhaft, wenn die Führungselemente für die Produkte zugleich eine Seitenführung für die Mitnehmer der Längsfördereinrichtung bilden.

Die Mitnehmer weisen vorzugsweise Schlitze zur Aufnahme eines Stieles des Produktes sowie einen kurvenbestimmten, insbesondere radiusbestimmten Lagerungsabschnitt für einen Ball des Produktes auf, wobei die Kurvenkrümmung des Lagerungsabschnittes insbesondere derart ausgebildet ist, dass bei einer Freigabe des Produktes an die Verpackungseinheit unter Abtauchen der Mitnehmer aus der zweiten Bewegungsbahn diese Freigabe im Wesentlichen beschleunigungsfrei erfolgt.

Die Längsfördereinrichtung ist vorzugsweise stromauf eines jeweiligen Mitnehmers mit einer Stielauflage und/oder einem Rückhalteelement zur Lagerung des Produktes, insbesondere eines Stieles desselben, versehen und es sind nach einem weiteren, bevorzugten Ausführungsbeispiel der erfindungsgemäßen Zuführungsvorrichtung die Führungselemente unter Ausbildung eines Festanschlages zum Umlegen des Stieles nach vorwärts oder rückwärts in Transportrichtung der Längsfördereinrichtung ausgebildet.

Ein besonderes lagesicheres und zuverlässiges Ergreifen der Produkte, insbesondere eines Stieles ist auch im Hochleistungsbereich einer solchen Verpackungsmaschine von z. B. ca. 1.000 Takten pro Minute und entsprechenden Beschleunigungskräften, die auch auf das Produkt einwirken, dadurch in vorteilhafter Weise verbessert, dass die Greiferbacken, der an dem Entnahmerad schwenkbar gelagerten Greiferbackenpaare, zusammenwirkende Ausnehmungen zur Erfassung und form- und/oder kraftschlüssigen Halterung des Stieles des Produktes aufweisen. Dabei besitzen die Greiferbacken vorzugsweise radial auswärts weisende Einführschrägen an ihren Enden innen und/oder außen zur glatten Produktübergabe an die Längsfördereinrichtung ohne Kollision mit dem jeweiligen Produkt.

Schließlich weist die Längsfördereinrichtung in Verbindung mit dem Transportmittel vorzugsweise einerseits die beabstandeten Mitnehmer und andererseits die jeweils zugeordneten Stielauflagen und/oder ein Rückhalteelement für das Produkt auf.

Aufgrund des kontinuierlichen Arbeitsprinzips sind mit der vorliegenden Erfindung wesentlich höhere Leistungsbereiche und Verpackungsleistungen im Bereich von bis zu 1.000 Arbeitstakten pro Minute auch für die Verpackung komplizierter Produkte, wie z.B. Produkte mit Stiel (Lollipops) in Verpackungen, wie z.B. Flowpacks (Schlauchbeutelverpackungen) realisierbar, und damit Leistungsbereiche, wie sie bisher nur für mit einer Mehrzahl von rotierenden Köpfen versehene, nach dem kontinuierlichen Arbeitsprinzip arbeitende Hochleistungs-Verpackungsmaschinen erreichbar sind. Eine solche Verpackungseinrichtung ist z.B. in der EP 1 712472 A1 dargestellt.

Hinsichtlich der vorbereitenden Produktvereinzelung in einem Vereinzelungsteller sowie der Entnahme der Produkte und deren Übergabe an eine nachgeordnete Einrichtung wird der Gegenstand der EP 1 721 472 A1 durch ausdrückliche Inbezugnahme mit zum Gegenstand der Offenbarung der vorliegenden Anmeldung gemacht.

Vorzugsweise ist auch im Rahmen der vorliegenden Erfindung die erste Bewegungsbahn (stromab der Vereinzelungseinrichtung) der ersten Fördereinrichtung um eine stationäre Rotationsachse eine vorzugsweise eine kreisförmige Bewegungsbahn, die vorzugsweise durch ein Entnahmerad realisiert wird, das die vorzugsweise mit einem Stiel versehenen Produkte (Lollipops) an diesem Stiel möglichst nahe an einem Ball (Kopf) des Produktes ergreift, d.h. unmittelbar benachbart zur äußeren Umfangsoberfläche eines Aufgaberinges der Vereinzelungseinrichtung (Vereinzelungsscheibe), in deren Taschen die Produkte mit radial auswärts weisenden Stielen aufgenommen sind, erfasst, so dass sich Lagefehler von Stielen nicht oder jedenfalls nicht wesentlich auf die Transportsicherheit und ein sicheres Ergreifen der Produkte bei hohen Arbeitsgeschwindigkeiten auswirkt.

Zum Ausgleich von unterschiedlichen Arbeitsgeschwindigkeiten zwischen der Vereinzelungseinrichtung einerseits und der zu einer Verpackungsmaschine führenden Längsfördereinrichtung, wie z.B. einer mit Mitnehmern versehenen Transportkette, sind an der ersten Fördereinrichtung, vorzugsweise dem Entnahmerad schwenkbar gelagerte Greiferbackenpaare vorgesehen, durch die die Produkte, vorzugsweise Lollipops, am Stiel ergriffen und in einer unabhängig von der Rotation des Entnahmerades erfolgenden beschleunigten Bewegung zu einer Übergabeposition, die vorzugsweise zwischen 90° und 270°, höchst vorzugsweise zwischen 150 und 210° von der Aufnahmeposition beabstandet ist, bewegt werden.

Auf diese Weise wird ein sehr produktschonendes Einlegen der Produkte, insbesondere Lollipops, in die Längsfördereinrichtung erreicht und es treten nur minimale Differenzgeschwindigkeiten an einer Übergabeposition auf. Es wird daher auch vermieden, dass die Produkte in der Längsfördereinrichtung, z.B. durch Mitnehmer einer Transportkette, einer Stoßbelastung ausgesetzt sind. Überdies werden hierbei Fallstrecken oder andere dynamisch problematische Förderbereiche vermieden und es wird ein insgesamt dynamisch ruhiger und produktschonender Lauf der gesamten Zufördereinrichtung mit hohen Arbeitsgeschwindigkeiten erreicht.

Bei mit einem Stiel versehenen Produkten wird überdies der Richtungswechsel bzw. die Änderung der Produktorientierung zwischen einer im Wesentlichen radialen Produkt- und Stielorientierung beim Verlassen der Vereinzelungseinrichtung und Entnehmen der Produkte an der Entnahmestelle und einer Längsorientierung der Produkte in der Längsfördereinrichtung zur nachfolgenden Verpackung, z.B. durch einen Schlauchbeutel (unter Längsorientierung der Stiele in einer Mitnehmer-Transportkette) vereinfacht. Vorzugsweise sind hierfür stromab einer Übergabeposition der Produkte, d.h. am Beginn der Längsfördereinrichtung, wenn diese das Produkt von der ersten Fördereinrichtung (vorzugsweise dem Entnahmerad) übernimmt, einfache Führungselemente im Sinne der Ausbildung einer Steuerkurve für den Stiel des Produktes für ein produktschonendes Ändern der Orientierung des Stieles und damit des gesamten Produktes hin zu einer Ablage in Längsrichtung der Längsfördereinrichtung vorgesehen.

Die Erfindung ist allerdings nicht auf die Verpackung, z.B. Schlauchbeutelverpackung (Flowpack) von Produkten mit Stiel (Lollipops) beschränkt, sondern ist überall dort anwendbar, wo eine produktschonende Anpassung und Übergabe von Produkten, insbesondere verhältnismäßig komplizierten Produkten, in Zuführungssystemen, und zwar unabhängig von der Art nachfolgenden Verpackung, erforderlich ist. Insbesondere ist die vorgeschlagene Lösung dort anwendbar, wo es darauf ankommt, vereinzelte Produkte vereinzelt in eine Transportkette einzulegen oder durch einen Linearförderer weiter zu transportieren, insbesondere zu einer Verpackungsmaschine. Die Erfindung kann vorteilhaft auch dann verwendet werden, wenn z.B. nach vereinzelter Bereitstellung der Produkte, z.B. in einer Vereinzelungseinrichtung, diese einer "summarischen" Transporteinrichtung zugeführt werden, womit z.B. eine Längsfördereinrichtung wie eine Transportkette oder auch ein Transportband, die sich stromauf einer Verpackungseinheit befinden, gemeint ist, und in der die vereinzelten Produkte, ggf. unter vorheriger Umorientierung ihrer Lage, vereinzelt jedoch "summarisch", d.h. durch eine (einzige) Zufördereinrichtung, die mehreren Produkten gemeinsam ist (z.B: Mitnehmerkette), der nachfolgenden Verpackungsmaschine bzw. Verpackungseinheit wie z.B. einer Flowpackmaschine, zugeführt werden.

Dabei wird durch die vorliegende Erfindung auch auf die unterschiedliche Position der Produkte in einer stromaufseitigen Vereinzelungseinrichtung einerseits und der stromabseitigen Längsfördereinrichtung andererseits Bezug genommen und diese entweder durch die erste Fördereinrichtung selbst(z.B. durch zusätzliche Rotation von Produkthaltemitteln um eine oder mehrere weitere, z.B. radial oder axial orientierte Achsen) oder aber durch im Anschluss an eine Produktübergabe auf die lineare Fördereinrichtung vorgesehener Führungselemente für das Produkt erreicht

Der Erfindung wird nachstehend anhand eines Ausführungsbeispiels und zugehöriger Zeichnungen näher erläutert. In diesen zeigen:
- Fig. 1: eine schematische Übersichtsdarstellung einer Zuführungseinrichtung für die Verpackung von Produkten mit Stiel (Lollipops) im Flowpack,
- Fig. 2: eine perspektivische Darstellung eines Entnahmekopfes der Zuführungs- einrichtung und einer Produktübergabe an eine Längsfördereinrichtung zur Zuführung von Lollipops zu einer Flowpack-Verpackungseinheit,
- Fig. 3: eine Teil-Schnittdarstellung einer Produktübergabe von dem Entnahmerad an die Längsfördereinrichtung in einen Schnitt A nach Fig. 2,
- Fig. 4: weitere Schnittdarstellungen, die das Umlegen des Stieles des Lollipops mit Schnitten B, C und D in Fig. 2 verdeutlichen,
- Fig. 5: eine schematische, perspektivische Darstellung des stromaufseitigen Be- reiches einer Transportkette (Mitnehmerkette), als Längsfördereinrichtung, und
- Fig. 6: eine schematische Ansicht eines stromaufseitigen Endbereiches der Längsfördereinrichtung unter Einförderung der Lollipops in einen Form- schacht einer Flowpack-Verpackungseinheit.

Die Erfindung wird nachstehend anhand einer Verpackungseinrichtung bzw. einer Zufördereinrichtung für eine Lollipop-Verpackung im Flowpack erläutert, ohne hierauf beschränkt zu sein. Ziel ist es bei einer derartigen Einrichtung mit hoher Arbeitsleistung von bis zu 1000 Arbeitstakten (Verpackungen) pro Minute, die Lollipops in Einzel-Flowpacks (Schlauchbeutelverpackungen) zu verpacken, wobei neben der erheblichen Leistungssteigerung eine besonders produktschonende und damit hochwertige Behandlung der Lollipops bei möglichst glatter Verkettung der einzelnen Abschnitte des Zuführungssystems, insbesondere im Bereich der Aufgabe der Produkte an eine Längsfördereinrichtung erfolgen soll.

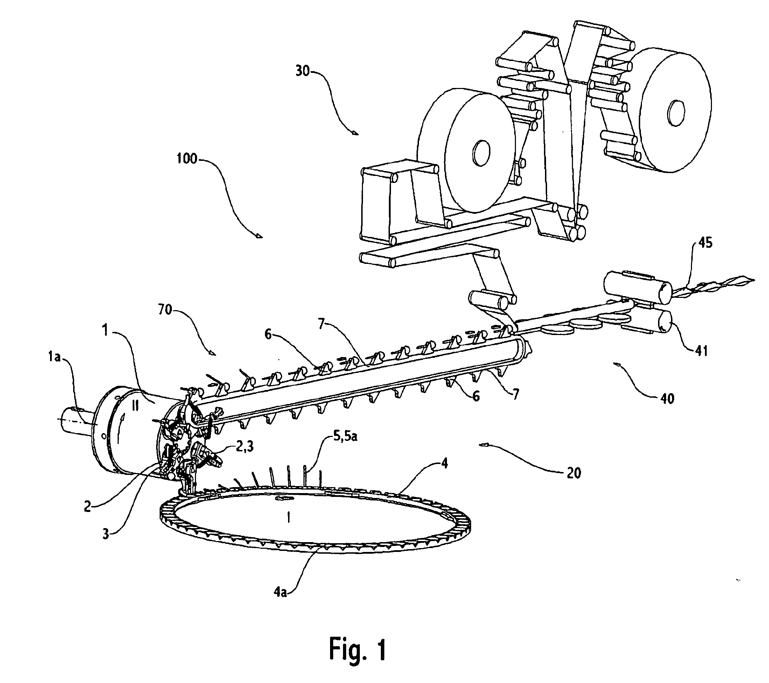

Figur 1 zeigt schematisch den Gesamtaufbau einer Flowpack-Verpackungsmaschine 100 mit ihren Hauptkomponenten eines Zuführungssystems 20 für die Produkte, hier Lollipops 5 mit einem Stiel 5A, einer Verpackungsmaterial- Zuführungseinrichtung 30 für die Bildung eines kontinuierlichen Flowpackschlauches im Bereich einer Flowpack-Einheit 40 mit nachgeordneter Siegeleinrichtung 41 zur Abtrennung der einzelnen Flowpacks 45, wie dies in üblicher Weis ein Flowpack-Maschinen erfolgt. Die Flowpack-Verpackung von Lollipops ist hier nicht weiter erläutert und folgt herkömmlichen Grundsätzen, während sich der Gegenstand der Erfindung auf das Zuführungssystem 20 für die Lollipops stromauf der Flowpack-Einheit 40 bezieht.

In ebenfalls herkömmlicher Weise werden die Lollipops 5 aus einem Produktvorrat zunächst auf einen hier nicht dargestellten Vereinzelungsteller als Vereinzelungseinrichtung aufgegeben und unter tangentialer Beschleunigung infolge einer Rotation des Vereinzelungstellers 4 um eine hier nicht dargestellte Vertikalachse, mit ihren Bällen (Köpfen) 5b in Taschen 4a eines äußeren Aufgaberinges 4 des Vereinzelungstellers aufgenommen, wobei die Taschen 4a radial auswärts in Aufnahmeschlitzen münden, so dass die Lollipops 5 mit ihren Stielen 5A radial auswärts weisend vereinzelt in dem Aufgabering 4 angeordnet sind, wie dies in Figur 1 nur schematisch dargestellt ist. Der Vereinzelungsteller ist vom Aufgabering 4 umgeben und vorzugsweise gegensätzlich zu diesen rotierend angetrieben.

Diese Vereinzelung von Lollipops ist z.B. aus der EP 1 712 472 A1 bekannt, die hinsichtlich der Vereinzelung der Lollipops und deren Weitergabe an eine nachgeordnete Einrichtung hiermit vollständig zum Gegenstand der Offenbarung der vorliegenden Anmeldung gemacht wird. D.h., die Vereinzelung der Lollipops in dem Vereinzelungsteller (mit z.B. gegensätzlich zum Vereinzelungsteller rotierenden Aufgabering 4) nach der vorliegenden Anmeldung kann sämtliche Merkmale aufweisen, wie sie sich aus der zugehörigen Beschreibung und den zugehörigen Figuren (vgl. dort insbesondere Fig. 1 bis 8) der EP 1 712 427 A der Anmelderin ergeben. Es können auch im vorliegenden Fall sämtliche Zubehöreinrichtungen, wie Bürsten zur Orientierung der Lollipops 5 und deren richtige Aufnahme in den Taschen 4a des Aufgaberinges 4 der Vereinzelungsscheibe bzw. Fehlerprüfeinrichtungen für die Lollipops und die Überwachung eines Füllgrades des Vereinzelungstellers vorgesehen sein.

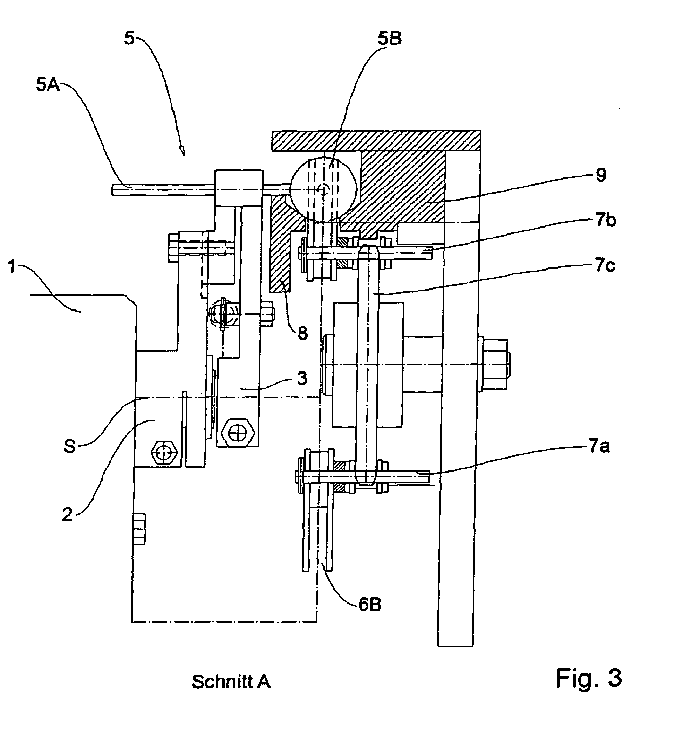

Dem Vereinzelungsteller bzw. dem vorzugsweise gegensinnig zu diesem in Umfangrichtung drehbaren Aufgabering 4 ist als erste Fördereinrichtung ein Entnahmekopf 1 zugeordnet, der um eine im wesentlichen horizontale stationäre Achse 1 a drehbar ist und an seiner Vorderseite mit einer Mehrzahl, im vorliegenden Fall sechs, Greiferbackenpaare 2, 3 versehen ist, die um eigenen Schwenkachsen S (Fig. 3) jeweils unabhängig voneinander zur Ausführung einer weiteren, beschleunigten Bewegung schwenkbar an einer Stirnseite des Entnahmekopfes 1 gelagert sind und opponierende Greiferbacken 2, 3 aufweisen. Die Rotationsrichtung des Entnahmekopfes 1 ist auf diejenige des Aufgaberinges bzw. Vereinzelungsstellers 4 abgestimmt, vgl. Pfeile I und II in Fig. 1.

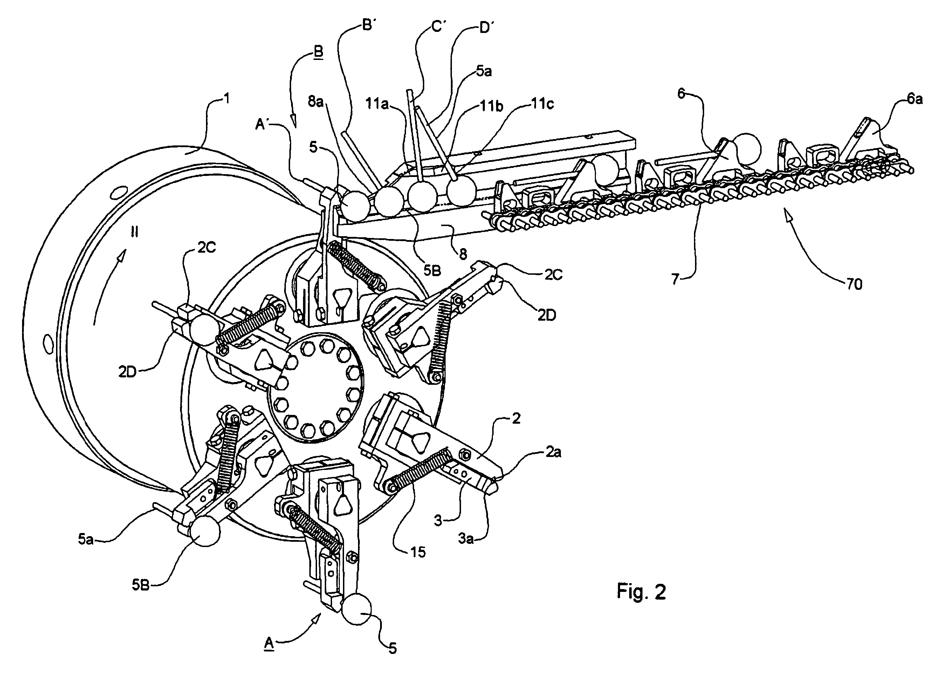

Die Greiferbackenpaare 2, 3 besitzen opponierende, z.B. gewinkelte Ausnehmungen 2a, 3a (s. Fig. 2), mit denen ein Stiel 5A des Lollipop formschlüssig und sicher ergriffen werden kann. Die Öffnungs- und Schließbewegung der Greiferbackenpaare wird in üblicher Weise kurvengesteuert bewirkt unter zusätzlicher Vorspannung durch entsprechende Schließfedern 15. Das Entnahmerad 1 dient dazu, die Lollipops 5 von dem Vereinzelungsteller bzw. Aufgabering 4 desselben in eine Längsfördereinrichtung 70, hier gebildet durch eine mit Mitnehmern 6 versehene Transportkette 7, einzulegen. Dabei können die Geschwindigkeiten des Vereinzelungsteller mit dem Aufgabering 4 bzw. des Entnahmekopfes 1 von derjenigen der umlaufenden Transportkette 7 differieren. Um eine solche Geschwindigkeitsdifferenz auszugleichen, sind die Greiferbackenpaare 2, 3 um die zusätzlichen, achsparallel zur Hauptachse 1a des Entnahmerades 1 ausgebildete Schwenkachsen S gesteuert schwenkbar und transportieren jeweils ein Lollipop 5 von einer Entnahmeposition A in eine hier um 180° gegenüberliegend versetzt ausgebildete Übergabeposition B an die Längsfördereinrichtung 70 mit der Transportkette 7 sowie den von diesen beabstandet getragenen Mitnehmern 6, wobei in Fig. 2 die Transportkette 7, die selbstverständlich umlaufend geführt ist (in Fig. 2 nur ausschnittsweise gezeigt) im Bereich der Übergabeposition B aus Übersichtsgründen nicht dargestellt ist.

Die Übergabeposition ist nicht auf eine genau obere Position gegenüberliegend zu einer genau unteren Entnahmeposition (180° versetzt) beschränkt, sondern es können hier weite Winkelbereiche im Bereich von 90° bis 270° gewählt werden. Je geringer der Winkelabstand zwischen der Entnahmeposition A und der Übergabeposition B ist, desto geringer ist allerdings die durch das Entnahmerad 1 erreichte Flexibilisierung der Produktübergabe bzw. die Anpassbarkeit an unterschiedlichen Arbeitsgeschwindigkeiten zwischen Transportkette 7 und Entnahmerad 1 bzw. Vereinzelungsteller mit Aufnahmering 4, d.h. umso präziser müssen die Geschwindigkeiten miteinander in Übereinstimmung gebracht werden. Bevorzugte Winkelbereiche, über die der Transport der Lollipops 5 durch den Entnahmekopf 1 erfolgt, liegen daher zwischen Entnahmeposition A und Übergabeposition B an die Längsfördereinrichtung 7 im Bereich von 150° bis 210°.

Auch im vorliegenden Fall ergreifen die Greiferbacken 2, 3 jedes Greiferbackenpaares 2, 3 die Stiele 5A der Lollipops 5 möglichst nahe am Ball bzw. Kopf 5B der Lollipops 5, d.h. unmittelbar an einer Außenumfangsfläche des Aufgaberinges des Vereinzelungstellers, um Lagefehler bzw. generell einen Einfluss von Lageabweichungen des Stieles 5A am Ball 5B der Lollipops 5 praktisch ohne Einfluss auf die Übergabe und Transportgenauigkeit der Produktförderung zu lassen und eine hohe Genauigkeit beim Ergreifen der Stiele durch die opponierenden Ausnehmungen 2A, 2B der Greiferbacken 2, 3 zu realisieren.

Nach dem Erreichen der Übergabeposition B (s. Fig. 2), in der der jeweilige Lollipop 5 an die Längsfördereinrichtung 70 übergeben wird (s. Fig. 2 und 3), öffnen die Greiferbacken 2, 3 und geben das Produkt 5 frei.

Die Greiferbacken 2, 3 weisen nicht nur Ausnehmungen bzw. Führungen 2A, 2B zum formschlüssigen Halten des Stieles 5A der Lollipops auf, sondern überdies an ihren Ende Einführschrägen 2C, 2D, die so ausgebildet sind bzw. in ihrer Schräge bemessen sind, dass nach dem Freigeben der Artikel unter Rotation des Entnahmerades 1 keine Kollision zwischen den Greiferbacken und den Lollipops bzw. den Stielen 5A derselben auftritt. In Abhängigkeit von den konkreten Bewegungs- und Raumverhältnissen ist dabei vorzugsweise eine Schwenkbewegung der Greiferbackenpaare um ihre Schwenkachse am Entnahmekopf 1 (Eintauchbewegung und Nickbewegung) vorgesehen.

In Fig. 2 sind verschiedene Phasen A' - D' der Aufgabe eines Lollipops 5 auf den stromaufseitigen Bereich der Längsfördereinrichtung 70 gezeigt.

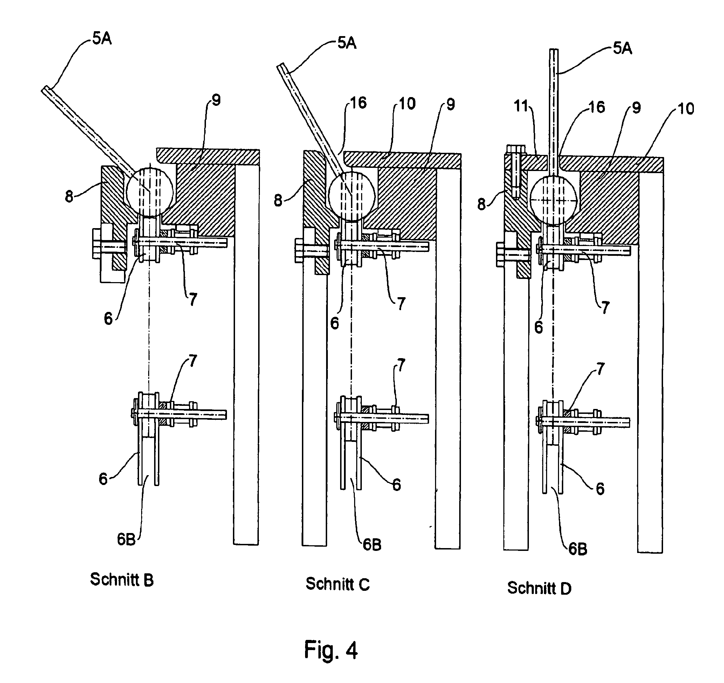

Die Übergabe des Lollipops 5 aus der Übergabeposition B in das stromaufseitige Ende der Längsfördereinrichtung 70 ist in Fig. 2 in mehreren Phasen A' - D' für einen einzigen Lollipop 5 dargestellt, um das Umlegen des Stieles 5A, d.h. das Einsetzen des Lollipops in die Transportkette 7, zu verdeutlichen. Den Positionen A', B', C', D' in Fig. 2 entsprechen die "Schnitte "A - D" mit "Schnitt A" in Fig. 3 (Vertikalschnitt A mit dem Lollipop 5 in der Übergabeposition) bzw. die "Schnitte B, C und D" in Fig. 4 (jeweils entsprechende Vertikalschnitte), aus denen die Umorientierung des Lollipop 5 aus der Übergabeposition B mit horizontal liegendem Stiel 5B (s. Fig. 2 und 3) unter Aufrichten des Stieles (Fig. 4, Schnitt B) über eine vertikale Zwischenposition (Schnitt C in Fig. 4) in Richtung einer Längsorientierung des Stieles in der Transportkette 7 (Schnitt D in Fig. 4) zu einer mit der Zuförderrichtung der Transportkette 7 übereinstimmenden Längsposition des Stieles 5A, der nach hinten gewandt ist, d.h. mit vorauslaufendem Ball des Lollipop 5, wie in den Fig. 1 bis 3 und 5 sowie Fig. 6 ersichtlich ist.

Das Produkt (5) mit dem Stiel (5A) wird also in einer im Wesentlichen horizontalen Position auf der ersten Bewegungsbahn zwischen einer Aufnahmeposition (A) und einer Übergabeposition (B) an die Längsfördereinrichtung (70) geführt, nach Übergabe an die Längsfördereinrichtung (70) der Stiel (5A) aus einer im Wesentlichen horizontalen Position in eine aufgerichtete Zwischenposition bewegt und anschließend der Stiel (5A) in eine im Wesentlichen horizontale Position in Längsrichtung der Längsfördereinrichtung (70), im Wesentlichen parallel zu einer Bewegungsbahn der Längsfördereinrichtung entlang der zweiten Bewegungsbahn gebracht wird.

Daher ist eine im Wesentlichen horizontale Position des Stieles (5A) des in der Längsfördereinrichtung (70) geförderten Produktes (5) im Wesentlichen in einer Position 90° in einer horizontalen Ebene gedreht, gegenüber einer Position des Stieles (5A) in einer Übergabeposition (B) zwischen der ersten und zweiten Bewegungsbahn.

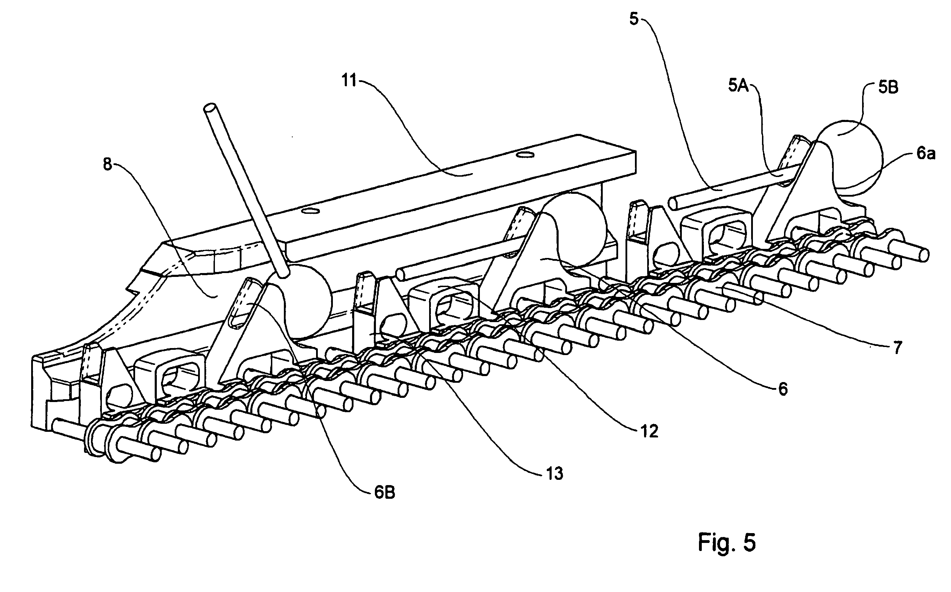

Verantwortlich für diese besonders schonende und unter Fortbewegung des Lollipop 5 mittels eines Mitnehmers 6, der, wie insbesondere Fig. 5 aber auch die Darstellungen in den Fig. 3 und 4 verdeutlichen, mit der Transportkette 7 in beabstandeter Weise fest verbunden ist und mit dieser umläuft, sind zusammenwirkende Führungselemente 8, 9, die ein stromaufseitiges Ende der Transportkette 7 umgeben (diese ist in dem Bereich unmittelbar benachbart zu der Übergabeposition B in Fig. 2 aus Übersichtsgründen nicht gezeigt), wobei nach dem Freigeben des Artikels in der Übergabeposition B und Lösen de Greiferbacken 2, 3 vorn Stiel 5A der Lollipops 5 durch einen aus dem stromaufseitigen Umlenkungsbereich der Transportkette 7 von unten hinten auftauchenden Mitnehmer 6 am Ball 5B schonend durch Anlage ergriffen und unter Auflage auf Führungsschienen 8, 9 für den Bereich der Lageumorientierung des Stieles, d.h. vor einer Längsorientierung des Stieles, entlang dieser Führungsschiene 8 durch den entsprechenden Mitnehmer 6 geschoben wird.

Hierzu ist ein vertikal ausgebildeter Bereich 6a des Mitnehmers 6 mit einer kurvenförmige Anlagefläche 6A versehen, wie dies insbesondere in Fig. 5 deutlich ist, die der Kugelform des Balls 5B des Lollipops 5 angepasst ist und produktschonend mit diesem zur Anlage kommt. Der Führungsschiene 8 ist eine korrespondierende Führungsschiene 9 zugeordnet (vgl. Fig. 3, Fig. 4), die in Fig. 2 aus Übersichtsgründen nicht dargestellt ist, wobei die Führungsschienen 8, 9 zwischen sich einen Spalt16 belassen, durch den die an der Transportkette befestigten Mitnehmer 6 hindurchgreifen zum Kontakt mit dem Ball 5B des Lollipops, wie dies aus den Fig. 3 und 4 ersichtlich ist.

Dabei bilden die Führungsschienen 8, 9 nicht nur eine Führung für den Produktkopf, d.h. für den Ball 5B des Lollipop 5, sondern überdies auch eine Seitenführung für den Mitnehmer 6 der Transportkette 7. Diese ist mit ihrem oberen Trum und ihrem unteren Trum 7a und 7b sowie einem Kettenrad 7c schematisch in Fig. 3 im Längsschnitt dargestellt, ohne dass auf diesen Aufbau hier genauer eingegangen werden muss, da derartigen Transportketten als Zuführungsorgane herkömmlich sind.

Auf der linken Seite in Fig. 3 sind die Greiferbacken 3, 4 des Greiferbackenpaares, die de Stiel 5A verhältnismäßig nahe am Ball 5B des Lollipops halten, gezeigt, ebenso wie die Schwenkachse S des Greiferbackenpaares 2, 3. Mit den Führungsschienen 8, 9 wirke weitere, einen Führungsschlitz 16 als Steuerkurve für die Bewegung des Stieles 5A des Lollipops 5 dienende Kurven-Führungsabdeckungen 10, 11 zusammen, die von oben bzw. von vorn oder integral mit den Führungsschienen 8, 9 bzw. teilweise mit einem Gehäuseelement (s. Fig. 3) von oben verschraubt oder anderweitig verbunden sind und unter gleichzeitiger Vorwärtsbewegung des Lollipops 5 durch Eingriff des Mitnehmers 6 am Ball 5B des Lollipops, diesen in Transportrichtung voranbewegend, zu einem Aufrichten des Stieles des Lollipops 5 führen. Dies ist beginnend mit Fig. 3 in den Schnittdarstellungen für die Phasen B bis D in Fig. 2 in den Vertikalschnittdarstellungen von Fig. 4 verdeutlicht.

Aus Fig. 2 sind die entsprechenden, opponierend angeordneten Führungsflächen 1a, 11b an der Kurven-Führungsabdeckung 8 ersichtlich, ebenso wie ein Anschlag 11c, der nach dem Aufrichten des Stieles 5A in eine Vertikalposition (in Verbindung mit einer Einlaufschräge 8c) dazu führt, dass der Stiel 5A aus der Vertikalposition in Längsrichtung der Transportkette 7, d.h. in Zuförderrichtung umgelegt wird und eine stabile Lage in Verbindung mit der Abstützung durch den Mitnehmer 6 einnimmt. Zu diesem Zweck ist der Mitnehmer 6 mit einem Schlitz 6B in seiner Mitte versehen, in dem der Stiel 5A aufgenommen wird. In diesem Zusammenhang wird nach Verlassen des Bereiches der Führungselemente 8 bis 11 der Ball 5B des Lollipops komplett durch die vordere Kontur des Mitnehmers 6 abgestützt und aufgenommen, d.h. von diesem getragen.

Alternativ könnte die Produktorientierung des Lollipop 5 natürlich auch derart erfolgen, dass das Einlegen desselben in die Transportkette mit nach vorn weisendem Stiel, also mit dem Stiel vorauslaufend zum Ball, erfolgt.

In dem vorgesehenen Ausführungsbeispiel wird der Stiel 5A durch den festen Anschlag 11 nach hinten umgelegt, in die in Fig. 5 in dem stromabwärtigen Bereich der Transportkette 7 gezeigte Position, so dass die Stiele 5A der Lollipops 5 in den Schlitzen 6B der Mitnehmer zu liegen kommen unter Abstützung des Balls 5B an der kurvenförmigen Vorderseite 6A des Mitnehmers 6, wobei beim Umlegen des Stieles 5A aus der senkrechten Position (s. Fig. 4, Schnitt D) in die horizontale Transportposition gewährleistet ist, dass die seitlichen festen Führungsschienen bzw. Kurven-Führungselemente 10, 11 den Stiel 5A solange halten, bis dieser in den Schlitzen 6A der Mitnehmer 6 der Transportkette 7 eingelegt und aufgenommen ist.

Des Weiteren sind in jeder Station der Transportkette 7 (jeweils zwischen zwei Mitnehmern 6) eine Stielauflage 12 und ein Rückhalteelement 13 vorgesehen, die für eine zuverlässige Produktpositionierung auf der Transportkette 7 sorgen.

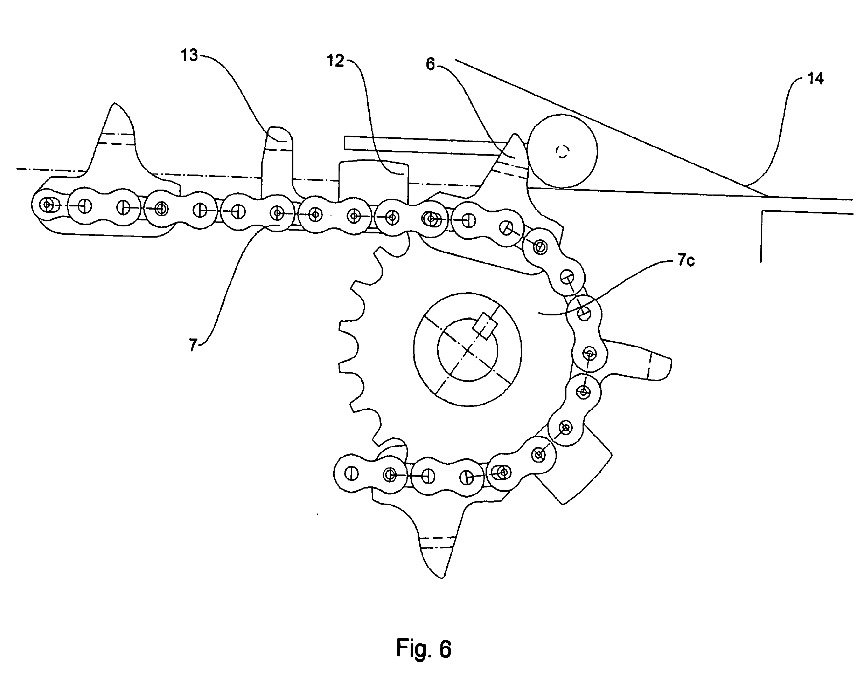

Schließlich zeigt Fig. 6 das stromaufseitige Ende und die Umlenkung der Transportkette 7 mittels des weiteren Kettenrades 7c und das Einsetzen der Lollipops 5 in einen Formschacht 14 einer Flowpack-Verpackungseinheit 40, wobei durch die spezielle konkav-konvexe Kurvenform der Vorderseite 6a der Mitnehmer 6 eine unbeschleunigte Einförderung der Lollipops 5 in den Formschacht 14 erfolgt, d.h. die Lollipop 5 mit gleichbleibender Geschwindigkeit im Folienschlauch abgelegt werden, so dass auch hier keine besonderen Produktbeanspruchungen oder Beanspruchungen des Verpackungsschlauches entstehen.

Obwohl in vorliegendem Ausführungsbeispiel die Lollipops 5 durch die Transportkette 7, d.h. durch deren Mitnehmer 6 getragen werden, ist es jedoch in gleicher Weise möglich, die Produkte schiebend, lediglich unter Druckkontaktverbindung mit Mitnehmern entlang beiderseitiger Schienen (d.h. im vorliegenden Ausführungsbeispiel unter Fortsetzung der beiderseitigen Führungsschienen 8 und 9) schiebend zu transportieren.

Durch das vorgeschlagene Zufuhrsystem können auch komplizierte Artikel, wie Produkte mit Stiel (Lollipops), und auch für Schlauchbeutel-Verpackungsmaschinen diese in den Hochleistungsbereich von bis zu 1000 Arbeitstakte pro Minute vorstoßen, wobei hierfür das Vorsehen einer Zwischen-Fördereinrichtung zwischen Vereinzelungseinrichtung (Vereinzelungsteller 4) und Längsfördereinrichtung (Transportkette 7) wichtig ist. Dies erfolgt hier in Gestalt der kontinuierlichen, ersten Fördereinrichtung, d.h. des Entnahmerades 1. Es wird hierdurch eine vorteilhafte Anpassung unterschiedlicher Transportgeschwindigkeiten sowie Positionen zwischen Vereinzelungseinrichtung und LängsFördereinrichtung (Transportkette 7) möglich.

Die Erfindung ist jedoch nicht auf die Verwendung eines rotierenden Entnahmerades beschränkt, sondern es könnte auch eine anders ausgebildete, erste Fördereinrichtung, wie z.B. eine mit Greifern versehene Transportkette anstelle des Entnahmerades zwischen Vereinzelungseinrichtung und Längsfördereinrichtung vorgesehen werden.

Die besondere konkav-konvexe Form bzw. ein Kurvenradius der Vorderseite der Mitnehmer 6 garantiert eine besonders schonende und beschleunigungsfreie Übergabe der Produkte aus der Transportkette 7, d.h. aus der Längsfördereinrichtung 70 in die eigentliche Verpackungsstation, hier eine Schlauchbeutel-Verpackungseinheit 40. Selbstverständlich ist die Erfindung nicht auf eine solche Verpackungseinheit beschränkt bzw. kann das vorstehend erläuterte Zuführungssystem auch als Zwischen-Zuführungseinrichtung in komplexeren Transportsystemen für insbesondere empfindliche kleinstückige Produkte Verwendung finden. Die Längsfördereinrichtung 70 kann ihrerseits auch entlang einer gekrümmten Bahn geführt werden, es kommt also nicht auf eine geradlinige oder lineare Förderung der Produkte an, wenngleich die Erfindung für lineare Zuführungssysteme besonders geeignet ist.

## Patentansprüche

1. Verfahren zur Zuführung von kleinstückigen, insbesondere mit einem Stiel versehenen Produkten, wie Lollipops, an eine Längsfördereinrichtung, insbesondere eine Zuführungseinrichtung für eine Verpackungsmaschine, insbesondere eine FlowpackMaschine, **dadurch gekennzeichnet, dass** die Produkte (5) zur Vereinzelung im Wesentlichen horizontal um eine vertikale Achse geführt, vereinzelt aufgenommen und auf einer ersten Bewegungsbahn im Wesentlichen orthogonal um eine horizontale Achse zur Vereinzelung der Produkte bewegt und an eine zweite lineare Bewegungsbahn einer Längsfördereinrichtung (70) übergeben werden, wobei die erste Bewegungsbahn eine rotatorische Bewegungsbahn ist und nach einer Übergabe des Produktes (5) von der ersten, rotatorischen Bewegungsbahn auf die zweite, lineare Bewegungsbahn eine Lage-Neuorientierung des Produktes (5) erfolgt.

2. Verfahren nach Anspruch 1, **dadurch gekennzeichnet, dass** die erste Bewegungsbahn eine um zumindest eine Rotationsachse verlaufende Bewegungsbahn ist und/oder eine Bewegungsgeschwindigkeit der Produkte (5) entlang der ersten Bewegungsbahn in einem Übergabebereich zu der zweiten Bewegungsbahn im Wesentlichen einer Bewegungsgeschwindigkeit entlang der zweiten Bewegungsbahn entspricht.

3. Verfahren nach zumindest einem der vorhergehenden Ansprüche 1 oder 2, **dadurch gekennzeichnet, dass** die Produkte (5) zur Vereinzelung im Wesentlichen horizontal geführt, auf der ersten Bewegungsbahn im Wesentlichen orthogonal zu der Vereinzelungsführung und entlang der zweiten Bewegungsbahn linear im Wesentlichen horizontal geführt werden.

4. Verfahren nach zumindest einem der vorhergehenden Ansprüche 1 bis 3 für mit einem Stiel versehene Produkte, insbesondere Lollipos, **dadurch gekennzeichnet, dass** die Produkte (5) zur Vereinzelung auf einer im Wesentlichen um zumindest eine stationäre vertikale Achse geführte, elliptische oder kreisförmige Bewegungsbahn geführt werden und die Stiele (5A) der Produkte von dieser radial auswärts weisen und/oder die Produkte (5) auf der ersten Bewegungsbahn einer weiteren, von der bewegungsbahnbedingten Beschleunigung unabhängigen Beschleunigung unterworfen werden.

5. Verfahren nach zumindest einem der vorhergehenden Ansprüche 1 bis 4, **dadurch gekennzeichnet, dass** stromab einer Übergabeposition (B) zwischen der ersten und zweiten Bewegungsbahn die Produkte (5) beabstandet durch Mitnehmer (6) der Längsfördereinrichtung (70) geführt und/oder fortbewegt werden und/oder durch diese aufgenommen werden, vorzugsweise getragen und/oder entlang einer Gleitfläche geschoben werden.

6. Verfahren nach zumindest einem der vorhergehenden Ansprüche 1 bis 5 für mit einem Stiel versehene Produkte, insbesondere Lollipops, **dadurch gekennzeichnet, dass** das Produkt (5) mit dem Stiel (5A) in einer im Wesentlichen horizontalen Position auf der ersten Bewegungsbahn zwischen einer Aufnahmeposition (A) und einer Übergabeposition (B) an die Längsfördereinrichtung (70) geführt, nach Übergabe an die Längsfördereinrichtung (70) der Stiel (5A) aus einer im Wesentlichen horizontalen Position in eine aufgerichtete Zwischenposition bewegt und anschließend der Stiel (5A) in eine im Wesentlichen horizontale Position in Längsrichtung der Längsfördereinrichtung (70), im Wesentlichen parallel zu einer Bewegungsbahn der Längsfördereinrichtung entlang der zweiten Bewegungsbahn gebracht wird und/oder eine im wesentliche horizontale Position des Stieles (5A) des in der Längsfördereinrichtung (70) geförderten Produktes (5) im Wesentlichen in eine Position 90° in eine horizontale Ebene gedreht ist, gegenüber einer Position des Stieles (5A) in einer Übergabeposition (B) zwischen der ersten und zweiten Bewegungsbahn.

7. Verfahren nach Anspruch 6, **dadurch gekennzeichnet, dass** das Produkt (5) mit Stiel (5A) mit einem Ball (5B) einer Verpackungseinheit (40) zugewandt in der Längsfördereinrichtung aufgenommen ist und/oder während des Einbringens der Produkte (5) aus der Längsfördereinrichtung (70) in die Verpackungseinheit (40) die Produkte (5) im Wesentlichen beschleunigungsfrei in die Verpackungseinheit (40) übergeben werden.

8. Vorrichtung zur Zuführung von kleinstückigen, insbesondere mit einem Stiel versehenen Produkten, wie Lollipops (5) an eine Längsfördereinrichtung, insbesondere eine Zuführungseinrichtung für eine Verpackungsmaschine, insbesondere mit einer Flowpack-Verpackungseinheit, **gekennzeichnet durch** eine Vereinzelungseinrichtung mit vereinzelter Bereitstellung der Produkte in einer im Wesentlichen horizontalen Bereitstellungsebene, einem mit der Vereinzelungseinrichtung zusammenwirkenden, um eine horizontale Achse drehbaren Entnahmerad (1) mit einer Mehrzahl von opponierend bewegbaren Greiferbackenpaaren (2, 3) und einer stromab des Entnahmerades (1) angeordneten Längsfördereinrichtung (70), wobei in Verbindung mit der Längsfördereinrichtung (70) stromab einer Übergabeposition (B) eine Lageorientierungseinrichtung (8 bis 11) für das Produkt (5) vorgesehen ist.

9. Vorrichtung nach Anspruch 8, **dadurch gekennzeichnet, dass** das Entnahmerad (1) kontinuierlich um eine stationäre Achse rotiert und die Greiferbackenpaare (2, 3) an dem Entnahmerad (1) um eine Schwenkachse (S) parallel zu einer rotierenden stationären Rotationsachse (1c) des Entnahmerades (1) schwenkbar gelagert sind.

10. Vorrichtung nach Anspruch 8 oder 9, **dadurch gekennzeichnet, dass** die Vereinzelungseinrichtung ein Vereinzelungsteller mit einem an einem Außenumfang vorgesehenen Aufgabering (4) ist, der Taschen (4a) zur Aufnahme der Produkte (5) aufweist, insbesondere der Aufgabering (4) gegensinnig zur Rotation einer radial einwärts des Aufgaberinges angeordneten Verteilerscheibe drehbar, insbesondere wie die Verteilerscheibe um eine im Wesentlichen vertikal orientierte Achse drehbar ist, und/oder die Taschen (4a) am Außenumfang des Aufgaberinges (4) mit Aufnahmeschlitzen, vorzugsweise mit beiderseits derselben, gleichmäßig geneigten und symmetrisch zu dem Aufnahmeschlitz ausgebildeten Einlaufschrägen, versehen sind und/oder die Greiferbacken (2,3) der Greiferbackenpaare zusammenwirkende Ausnehmungen (2A, 3B) zur Erfassung und formschlüssigen Halterung des Stieles (5A) des Produktes aufweisen und/oder die Greiferbacken (2, 3) radial auswärts weisende Einführschrägen (2C, 2D) an ihren Enden innen und/oder außen aufweisen, zur produktkollisionsfreien Produktübergabe an die Längsfördereinrichtung (70).

11. Vorrichtung nach Anspruch 10, **dadurch gekennzeichnet, dass** die Lageorientierungseinrichtung zusammenwirkende, vorzugsweise stationäre Führungselemente (8 - 11), vorzugsweise zur Bildung einer Steuerungskurve, aufweist.

12. Vorrichtung nach zumindest einem der vorhergehenden Ansprüche 8 bis 11, **dadurch gekennzeichnet, dass** im Bereich einer Übergabeposition (B) eine Geschwindigkeitsdifferenz zwischen der ersten Fördereinrichtung, insbesondere dem Entnahmerad (1) und/oder einer Momentangeschwindigkeit der Greiferbacken (2, 3), und einer Transportgeschwindigkeit der Längsfördereinrichtung (70) minimiert, vorzugsweise im Wesentlichen Null ist.

13. Vorrichtung nach zumindest einem der vorhergehenden Ansprüche 8 bis 12, **dadurch gekennzeichnet, dass** die Längsfördereinrichtung (70) oberhalb eines Transportmittels, vorzugsweise einer Transportkette (7) oder eines Transportbandes, einen Führungsschlitz (16) zur Ausbildung einer Steuerkurve durch opponierende Führungselemente (10, 11) im Anschluss an eine Übergabeposition (B) von der ersten Fördereinrichtung (1) zu der Längsfördereinrichtung (70) aufweist, insbesondere die Führungselemente (10, 11) zur lageorientierenden Führung eines Stieles (5A) des Produktes (5) vorgesehen sind und/oder die Führungselemente (11) einen Festanschlag (11c) zum Umlegen des Stieles (5A) nach vorwärts oder rückwärts in Transportrichtung der Längsfördereinrichtung (70) aufweisen.

14. Vorrichtung nach zumindest einem der vorhergehenden Ansprüche 8 bis 13, **dadurch gekennzeichnet, dass** die Längsfördereinrichtung (70) beabstandete Mitnehmer (6) zum Eingriff mit dem Produkt (5), insbesondere einem Ball (B) desselben, und Transport zu einer Verpackungseinheit (40), insbesondere der Flowpack-Verpackungseinheit (40) aufweisen und/oder die Führungselemente (8, 9) für die Produkte (5) zugleich eine Seitenführung für die Mitnehmer (6) bilden und/oder die Mitnehmer (6) Schlitze (6B) zur Aufnahme eines Stieles (5A) des Produktes (5) sowie eine kurven-, vorzugsweise radiusbestimmten Lagerungsabschnitt (6a) für einen Ball (5B) des Produktes (5) aufweisen und/oder eine Kurvenkrümmung des Lagerungsabschnittes (6a) derart ausgebildet ist, dass bei einer Freigabe des Produktes (5) an die Verpackungseinheit (40) unter Abtauchen der Mitnehmer (6) aus einer zweiten Bewegungsbahn diese Freigabe im Wesentlichen beschleunigungsfrei erfolgt.

15. Vorrichtung nach zumindest einem der vorhergehenden Ansprüche 8 bis 14, **dadurch gekennzeichnet, dass** die Längsfördereinrichtung (70) stromauf des Mitnehmers eine Stielauflage (12) und/oder ein Rückhalteelement (13) zur Lagesicherung des Produktes (5), insbesondere eines Stieles (5A) desselben, aufweist, insbesondere die Längsfördereinrichtung (70) in Verbindung mit dem Transportmittel (7) einerseits die beabstandete Mitnehmer (6) andererseits, diesen jeweils zugeordnet, eine Stielauflage (12) und/oder ein Rückhalteelement (15) aufweist.

## Claims

1. Method for feeding small products, especially those with a handle, such as lollipops, to a longitudinal conveyor system, in particular a feeding device for a packaging machine, in particular a flow pack machine, **characterised in that** the products (5) are guided to a singling operation essentially horizontal around a vertical axis, picked up singly and moved to a first moving path essentially orthogonal around an axis horizontal to the singling of the products and transferred to a second moving path of a longitudinal conveyor system (70), whereby the first moving path is a revolving moving path and, after transfer of the product (5) from the first rotating, moving path to the second linear moving path, the product (5) is re-orientated to a new position.

2. Method according to claim 1, **characterised in that** the first moving path is a moving path which revolves around at least one rotational axis and/or a speed of the products (5) along the first moving path in a transfer area to the second moving path corresponds to a speed along the second moving path.

3. Method according to at least one of the previous claims 1 or 2, **characterised in that** the products (5) are guided essentially horizontally to the singling, then guided on the first moving path essentially orthogonal to the singling travel, and linearly and essentially horizontally along the second moving path.

4. Method according to at least one of the previous claims 1 to 3 for products with a handle, in particular lollipops, **characterised in that** the products (5) are guided to the singling on a guided elliptical or circular moving path essentially around at least one stationary vertical axis and the handles (5A) of the products point radially outwards and/or the products (5) on the first moving path are subject to an acceleration independent of the acceleration attributable to the moving path.

5. Method in accordance with at least one of the previous claims 1 to 4, **characterised in that**, downstream of a transfer station (B) between the first and second moving paths, the products (5) are guided, spaced apart, by carriers (6) on the longitudinal conveyor system (70) and/or moved forward and/or held by them, preferably supported and/or pushed along a smooth slide path.

6. Method in accordance with at least one of the previous claims 1 to 5 for products with a handle, in particular lollipops, **characterised in that** the product (5) is guided with the handle (5A) in an essentially horizontal position on the first moving path between a receiving position (A) and a transfer position (B) to the longitudinal conveyor system (70); after transfer to the longitudinal conveyor system (70), the handle (5A) moves from an essentially horizontal position to an upright intermediate position, after which the handle (5A) is orientated into an essentially horizontal position in the longitudinal direction of the longitudinal conveyor system (70) essentially parallel to a moving path of the longitudinal conveyor system and the product is conveyed further along the second moving path, and/or an essentially horizontal position of the handle (5A) of the product (5) being conveyed in the longitudinal conveyor system (70) is rotated essentially in a horizontal plane which is turned in a horizontal plane to a position 90° from a position of the handle (5A) in a transfer station (B) between the first and second moving paths.

7. Method in accordance with claim 6, **characterised in that** the product (5) with handle (5A) with its ball (5B) turned towards a packaging unit (40) is taken up in the longitudinal conveyor system and/or the products (5), experiencing essentially no acceleration as they are delivered from the longitudinal conveyorsystem(70) to the packaging unit (40), are transferred to the packaging unit (40).

8. Device for feeding small products, especially those with a handle, such as lollipops (5), to a longitudinal conveyor system, in particular a feeding device for a packaging machine, in particular a flow pack packaging unit, **characterised by** a singling device which delivers the products singly in an essentially horizontal delivery plane, by a take-up wheel (1) interacting with the singling device and rotating around a horizontal axis with a multiplicity of opposingly movable pairs of gripper jaws (2, 3) and a longitudinal conveyor system (70) arranged downstream of the take-up wheel (1), whereby, in conjunction with the longitudinal conveyor system (70), a position re-orientating device (8 to 11) is provided for the product (5) downstream from a transfer station (B).

9. Device in accordance with claim 8, **characterised in that** the take-up wheel (1) rotates continuously around a stationary axis and the pairs of gripper jaws (2, 3) are secured to the take-up wheel (1) such that they swivel about an axis of rotation (S) which is parallel to a rotating stationary axis of rotation (1c) of the take-up wheel (1).

10. Device in accordance with claim 8 or 9, **characterised in that** the singling device is singling plate with a transfer ring (4) provided on its periphery with recesses (4a) to accept the products (5), in particular a dispersing disc is disposed radially inwards in relation to the transfer ring (4) whereby the transfer ring (4) can rotate in the opposite direction to the dispersing disc and, in particular like the dispersing disc, around an essentially vertically orientated axis, and/or the recesses (4a) are provided with locating slots on the periphery of the transfer ring (4), preferably with lead-in chamfers on both sides of the locating slot and uniformly sloping and symmetric to the locating slot and/or the gripper jaws (2, 3) of the gripper jaw pairs have interacting recesses (2A, 3B¹) to grasp and positively hold the handle (5A) of the product and/or the gripper jaws (2, 3) have lead-in chamfers (2C, 2D) pointing radially outwards at their ends inside and/or outside to ensure a collision-free transfer of the product to the longitudinal conveyor system (70).

11. Device in accordance with claim 10, **characterised in that** the position re-orientation device has interacting, preferably stationary guide elements (8 - 11), preferably to form a control cam.

12. Device in accordance with at least one of the previous claims 8 - 11, **characterised in that** in the area of a transfer station (B) any difference in speed between the first conveyor, in particular the take-up wheel (1) and/or a momentary speed of the gripper jaws (2, 3), and a transportation speed of the longitudinal conveyor system (70) is minimised, which is preferably zero.

13. Device in accordance with at least one of the previous claims 8 - 12, **characterised in that** the longitudinal conveyor system (70) has a guide slot (16) above a means of transportation, preferably a conveyor chain (7) or conveyor belt, to form a control cam out of opposing guide elements (10, 11) following a transfer station (B) from the first conveyor (1) to the longitudinal conveyor system (70), in particular the guide elements (10, 11) are provided as an attitude orientating guide for a handle (5A) of the product (5) and/or the guide elements (11) have a fixed stop (11c) to move the handles (5A) forward or backward in the travel direction of the longitudinal conveyor system (70).

14. Device in accordance with at least one of the previous claims 8 - 13, **characterised in that** the longitudinal conveyor system (70) has carriers (6) spaced apart to engage with the product (5), in particular a ball (5B) of the same and transportation to a packaging unit (40), in particular a flow pack packaging unit (40), and/or the guide elements (8, 9) for the product (5) form, at the same time, a lateral guide for the carriers (6) and/or the ¹ 3A? - Translator carriers (6) have slots (6B) to accept a handle (5A) of the product (5) as well as a holding section (6a) with specific curvature and preferably a specific radius to hold a ball (5B) of the product (5) and/or a shape of the curvature of the holding section (6a) formed such that, when the product (5) is released to the packaging unit (40) as the carrier (6) sinks away from a second moving path, this release takes place essentially without acceleration.

15. Device in accordance with at least one of the previous claims 8 to 14, **characterised in that** the longitudinal conveyor system (70) is provided, upstream of the carrier, with a handle support (12) and/or a retaining element (13) to retain the product (5), in particular a handle (5A) of the same, in particular the longitudinal conveyor system (70), together with the transportation means (7) has on the one hand the spaced carriers (6) and on the other hand a handle support (12) assigned to each respectively and/or a retaining element (15).

## Revendications

1. Procédé pour amener des petits produits, en particulier pourvus d'un bâtonnet, tels que des sucettes, sur un convoyeur longitudinal, en particulier un dispositif d'amenée pour une machine d'emballage, en particulier une machine Flow pack, **caractérisé en ce que** les produits (5), pour être séparés, sont guidés globalement à l'horizontale autour d'un axe vertical, sont pris séparément et sont déplacés sur une première trajectoire globalement perpendiculaire autour d'un axe horizontal, pour la séparation des produits, et sont transférés sur une seconde trajectoire, linéaire, d'un convoyeur longitudinal (70), étant précisé que la première trajectoire est une trajectoire rotative et qu'après un transfert du produit (5) de la première trajectoire, rotative, sur la seconde trajectoire, linéaire, une réorientation de la position du produit (5) a lieu.

2. Procédé selon la revendication 1, **caractérisé en ce que** la première trajectoire est une trajectoire qui s'étend autour d'au moins un axe de rotation et/ou une vitesse de déplacement des produits (5) le long de la première trajectoire dans une zone de transfert vers la seconde trajectoire correspond dans l'ensemble à une vitesse de déplacement le long de ladite seconde trajectoire.

3. Procédé selon l'une au moins des revendications 1 ou 2, **caractérisé en ce que** les produits (5), pour être séparés, sont guidés globalement à l'horizontale, sont guidés sur la première trajectoire globalement perpendiculairement au guidage de séparation, et sont guidés globalement à l'horizontale, linéairement, le long de la seconde trajectoire.

4. Procédé selon l'une au moins des revendications 1 à 3 précédentes pour des produits pourvus d'un bâtonnet, en particulier des sucettes, **caractérisé en ce que** les produits (5), pour être séparés, sont guidés sur une trajectoire elliptique ou circulaire qui est guidée globalement autour d'au moins un axe vertical stationnaire, et les bâtonnets (5A) des produits sont dirigés radialement vers l'extérieur à partir de cette trajectoire et/ou les produits (5) sont soumis, sur la première trajectoire, à une accélération supplémentaire indépendante de l'accélération due à la trajectoire.

5. Procédé selon l'une des revendications 1 à 4 précédentes, **caractérisé en ce qu'**en aval d'une position de transfert (B) entre les première et seconde trajectoires, les produits (5) sont guidés, espacés, par des organes d'entraînement (6) du convoyeur longitudinal (70) et/ou sont éloignés et/ou sont reçus, de préférence portés, par celui-ci et/ou sont poussés le long d'une surface de glissement.

6. Procédé selon l'une au moins des revendications 1 à 5 précédentes pour des produits pourvus d'un bâtonnet, en particulier des sucettes, **caractérisé en ce que** le produit (5), avec le bâtonnet (5A) dans une position globalement horizontale, est guidé sur la première trajectoire entre une position de réception (A) et une position de transfert (B) sur le convoyeur longitudinal (70), après le transfert sur le convoyeur longitudinal (70) le bâtonnet (5A) est amené d'une position globalement horizontale à une position intermédiaire redressée, puis le bâtonnet (5A) est amené dans une position globalement horizontale, dans le sens longitudinal du convoyeur longitudinal (70), globalement parallèlement à une trajectoire du convoyeur longitudinal le long de la seconde trajectoire, et/ou une position globalement horizontale du bâtonnet (5A) du produit (5) transporté dans le convoyeur (70) est tournée jusqu'à une position globalement à 90° dans un plan horizontal, par rapport à une position du bâtonnet (5A) dans une position de transfert (B) entre les première et seconde trajectoires.

7. Procédé selon la revendication 6, **caractérisé en ce que** le produit (5) pourvu d'un bâtonnet (5A) est reçu dans le convoyeur avec sa tête (5B) dirigée vers une unité d'emballage (40) et/ou les produits (5), pendant qu'ils sont amenés dans l'unité d'emballage (40) à partir du convoyeur longitudinal (70), sont transférés dans ladite unité d'emballage (40) globalement sans accélération.

8. Dispositif pour amener des petits produits, en particulier pourvus d'un bâtonnet, tels que des sucettes (5), sur un convoyeur longitudinal, en particulier un dispositif d'amenée pour une machine d'emballage, en particulier une machine d'emballage Flow pack, **caractérisé par** un dispositif de séparation avec une préparation séparée des produits dans un plan de préparation globalement horizontal, avec une roue d'extraction (1) qui coopère avec le dispositif de séparation, qui est apte à tourner sur un axe horizontal et qui présente plusieurs paires de mâchoires (2, 3) mobiles dans des sens opposés, et un convoyeur longitudinal (70) qui est disposé en aval de la roue d'extraction (1), étant précisé qu'il est prévu en liaison avec le convoyeur longitudinal (70), en aval d'une position de transfert (B), un dispositif d'orientation de position (8 à 11) pour le produit (5).

9. Dispositif selon la revendication 8, **caractérisé en ce que** la roue d'extraction (1) tourne en continu sur un axe stationnaire, et les paires de mâchoires (2, 3) sont montées sur la roue d'extraction (1) pour pouvoir pivoter sur un axe de pivotement (S) parallèle à un axe de rotation stationnaire rotatif (1c) de ladite roue de prélèvement (1).

10. Dispositif selon la revendication 8 ou 9, **caractérisé en ce que** le dispositif de séparation est constitué par un plateau de séparation avec un anneau de distribution (4) qui est prévu sur une circonférence extérieure et qui présente des poches (4a) pour recevoir les produits (5), en particulier l'anneau de distribution (4) est apte à tourner en sens inverse par rapport à la rotation d'un disque de distribution disposé radialement vers l'intérieur de l'anneau de distribution et, comme ce disque, sur un axe orienté globalement à la verticale, et/ou les poches (4a) prévues sur la circonférence extérieure de l'anneau de distribution (4) sont pourvues de fentes de réception, en particulier de biseaux d'entrée formés des deux côtés des fentes, inclinés uniformément et symétriques par rapport à la fente de réception, et/ou les mâchoires (2, 3) des paires de mâchoires présentent des creux coopérants (2A, 3B) pour saisir et tenir par complémentarité de forme le bâtonnet (5A) du produit, et/ou les mâchoires (2, 3) présentent à leurs extrémités, à l'intérieur et/ou à l'extérieur, des biseaux d'introduction (2C, 2D) dirigés radialement vers l'extérieur pour transférer les produits sur le convoyeur longitudinal (70) sans collision des produits.

11. Dispositif selon la revendication 10, **caractérisé en ce que** le dispositif d'orientation de position comporte des éléments de guidage coopérants (8-11), de préférence stationnaires, de préférence pour former une courbe de guidage.

12. Dispositif selon l'une au moins des revendications 8 à 11 précédentes, **caractérisé en ce que** dans la zone d'une position de transfert (B), une différence de vitesse entre le premier convoyeur, en particulier la roue de prélèvement (1) et/ou une vitesse momentanée des mâchoires (2, 3), et une vitesse de transport du convoyeur longitudinal (70) est minimalisée, de préférence globalement nulle.

13. Dispositif selon l'une au moins des revendications 8 à 12, **caractérisé en ce que** le convoyeur longitudinal (70) présente, au-dessus d'un moyen de transport, de préférence d'une chaîne de transport (7) ou d'une bande de transport, une fente de guidage (16) pour former une courbe de guidage grâce à des éléments de guidage opposés (10, 11) à la suite d'une position de transfert (B) du premier convoyeur (1) vers le convoyeur longitudinal (70), en particulier les éléments de guidage (10, 11) sont prévus pour le guidage d'un bâtonnet (5A) du produit (5) avec une orientation de position, et/ou les éléments de guidage (11) présentent une butée fixe (11c) pour coucher le bâtonnet (5A) vers l'avant ou vers l'arrière dans le sens de transport du convoyeur longitudinal (70).

14. Dispositif selon l'une au moins des revendications 8 à 13 précédentes, **caractérisé en ce que** le convoyeur longitudinal (70) présente des organes d'entraînement espacés (6) pour venir en contact avec le produit (5), en particulier avec une tête (B) de celui-ci, et pour le transporter jusqu'à une unité d'emballage (40), en particulier l'unité d'emballage Flow pack (40), et/ou les éléments de guidage (8, 9) pour les produits (5) forment en même temps un guidage latéral pour les organes d'entraînement (6), et/ou les organes d'entraînement (6) présentent des fentes (6B) pour recevoir un bâtonnet (5A) du produit (5), ainsi qu'une partie d'appui (6a) à courbe, de préférence à rayon définis, pour une tête (5B) du produit (5), et/ou une courbure de la partie d'appui (6a) est conçue pour que lorsque le produit (5) est libéré et passe sur l'unité d'emballage (40) moyennant la descente des organes d'entraînement (6), à partir d'une seconde trajectoire, cette libération se fasse globalement sans accélération des organes d'entraînement (6).

15. Dispositif selon l'une au moins des revendications 8 à 14 précédentes, **caractérisé en ce que** le convoyeur longitudinal (70) présente, en amont de l'organe d'entraînement, un support de bâtonnet (12) et/un élément de retenue (13) pour bloquer la position du produit (5), en particulier d'un bâtonnet (5A) de celui-ci, en particulier le convoyeur (70) comporte, en combinaison avec le moyen de transport (7), d'une part les organes d'entraînement espacés (6), et d'autre part un support de bâtonnet (12) et/ou un élément de retenue (15) associé à chacun de ceux-ci.
